# EUROPEAN PATENT APPLICATION

(11) **EP 1 801 536 A1**
(43) Date of publication of application: **27.06.2007**
(21) Application number: 05112934.4
(22) Date of filing: 23.12.2005
(51) Int. Cl.: G01B 15/02, G01N 23/08

(54) **Method of manufacturing a pipe and a pipe**

(71) Applicant: Uponor Innovation AB, 513 81 Fristad (SE)
(72) Inventor: Järvenkylä, Jyri, 15870 Hollola (FI); Riesselmann, Franz-Josef, 49393 Lohne (DE); Stock, Hartmut, 98544 Zella-Mehlis (DE)
(74) Representative: Huhtanen, Ossi Jaakko

(57) **Abstract**

A multilayer pipe (2) is formed. The multilayer pipe (2) comprises at least two inner layers (2a, 2b, 2c) between the layers (2a, 2b, 2c) there is adhesive material (7). The adhesive material (7) or the materials in the layers (2a, 2b, 2c) are modified such that at least one physical property of the adhesive material (7) between the layers (2a, 2b, 2c) differs from the physical properties of the material in at least one layer (2a, 2b, 2c) such that the thickness of the layer (2a, 2b, 2c) is detected with x-ray imaging.

## Description

### Background of the invention

The invention relates to a method of manufacturing a pipe, the method comprising making a pipe having at least two layers, attaching the layers with adhesive material and measuring the properties of the pipe.

The invention further relates to a pipe comprising at least two layers and adhesive material between the layers.

When manufacturing pipes it is of utmost importance to detect the properties of the manufactured pipes in order to maintain the required quality. The properties are measured for example such that a part of the manufactured pipe is cut off and properties of that part are measured. This is a so-called offline inspection method. For example, the thickness of the pipe wall is measured. However, offline inspection method gives only samples of the pipe. Thus there is no guarantee whether the pipe is of a good quality throughout or not. Further, cutting off samples too often lowers the production rate of the production line.

The thickness of the pipe wall can be also measured online for example by using x-ray imaging. Such methods have been disclosed for example in JP 62014011 and US 2004/0234027. However, the above-mentioned publications do not teach how to measure the thicknesses of different layers of a pipe.

JP 55089707 discloses measuring the layer thicknesses of laminated materials inside a glass tube. X-rays are emitted to the object from an x-ray generating source and transmitted x-rays are pictured with an optical system. The distribution of intensity depending on the mass absorption coefficient of transmitted x-rays changes discontinuously at the boundary of each layer. When the distribution of intensity is caught with the optical system the degree of contrast is different for each layer. However, if the properties of each layer do not differ sufficiently from each other the thickness of each layer cannot be measured accurately enough.

JP 58-199679 discloses a non-destructive inspection method for measuring layer thicknesses of a composite material in which the physical qualities between the materials in different layers have almost no difference. A region is provided at the composite boundary of an inner layer and an outer layer of a composite pipe. A material physically dissimilar from the respective materials of the layers is placed in said region so that said material can be discriminated by ultrasonic reflection, an x-ray or the like. However, this region makes it more difficult to attach the layers together. Further, if the region is large it is quite difficult to attach the layer material to the material in said region. Further, providing the region and placing the physically dissimilar material to the region adds production steps in the manufacturing process of the pipe and thus the pipe is more difficult to manufacture.

### Brief description of the invention

The object of the present invention is to provide a new type of pipe and method for manufacturing the pipe.

The method of the invention is characterized in that the layers and the adhesive material are formed such that at least one physical property of the adhesive material differs from the physical property of at least one layer of the pipe and that the thickness of the layer is measured online with x-ray imaging based on the difference between the physical property of the layer of the pipe and the physical property of the adhesive material.

Further, the pipe of the invention is characterized in that the adhesive material and the layers are such that at least one physical property of the adhesive material between the layers differs from the physical property of the material in at least one layer such that the thickness of the layer can be detected with x-ray imaging.

In the invention a multilayer pipe is formed. The multilayer pipe comprises at least an inner layer and an outer layer. Between the inner layer and the outer layer there is adhesive material. The adhesive material or the materials in the layers are modified such that at least one physical property of the adhesive material between the layers differs from the physical property of the material in at least one layer such that the thickness of the layer can be detected with x-ray imaging. When the properties of the adhesive material differ from the material of the layer, the thickness of the layer can be measured with computer tomography. The boundary between the adhesive material and the layer can be seen very clearly, whereby the layer thickness can be determined. Further, it is possible to detect whether there is sufficiently adhesive material between the layers and whether the adhesive material is evenly and thoroughly distributed if the physical property of the adhesive layer between two layers differs from the physical properties of both the layers or if the thickness of one of the layers is already known before the measurement. The multi-layer pipe may be for example a composite pipe having an inner layer of plastic, a barrier layer of aluminium and an outer layer of plastic. There is adhesive material between the inner layer and the barrier layer and also between the barrier layer and the outer layer. The adhesive material may contain for example tie material, functionalised polyethylene and barium sulfate BaSO₄ as a filler. Such an adhesive material differs in density from the inner and outer layers and the barrier layer such that it can be clearly seen with x-ray imaging. Furthermore, the adhesion between aluminium and filler modified glueplastic is surprisingly good. The filler in the adhesive material could also improve the migration behaviour of the stabilizer in the adhesive material.

### Brief description of the figures

The invention will be described in more detail in the attached drawing, wherein:
Figure 1 is a schematic view of a pipe manufacturing arrangement, and
Figure 2 is an end-view in cross-section of a multilayer composite pipe.

In the figures the invention is presented in a simplified manner for the sake of clarity. In the figures, like parts are designated by like reference numerals.

### Detailed description of the invention

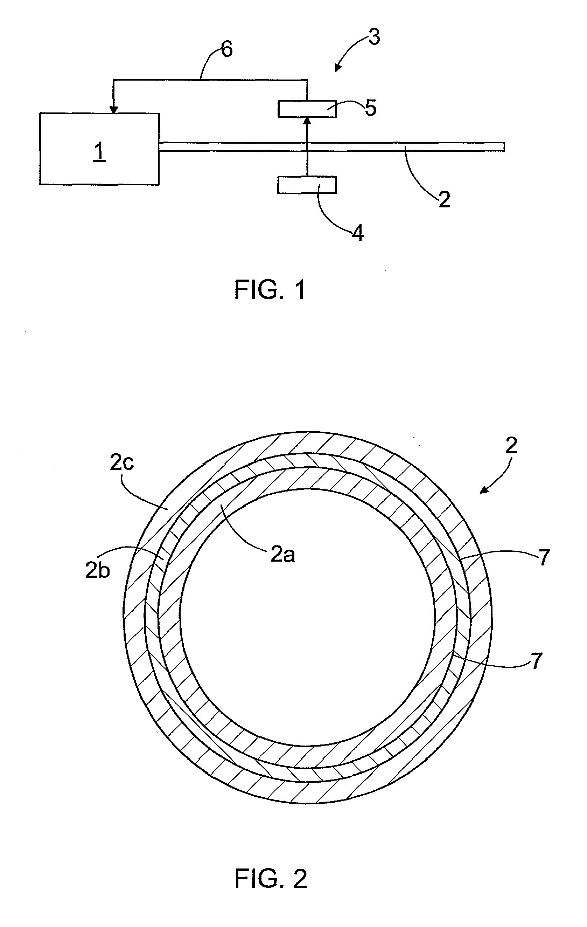

In Figure 1 block 1 denotes the basic steps of a multilayer composite pipe manufacturing process. The process is known per se to a person skilled in the art and therefore the process is not described in more detail herein.

The process produces a pipe 2. There is a measuring arrangement 3 for measuring the properties of the pipe online.

The measuring arrangement 3 comprises an x-ray inspection system, comprising one or more radiation sources 4 and assigned sensor systems 5 such that the measuring arrangement 3 produces x-ray images of pipe 2. The x-ray inspection system may be in fixed positions or rotate around pipe 2. The x-ray inspection system uses well-known algorithms to analyze and interpret the measured data according to computer tomography for detecting the properties of pipe 2. The measuring arrangement 3 is used for measuring the thicknesses of the layers of pipe 2. The structure and the operation of the measuring arrangement 3 is known per se to a person skilled in the art and therefore it is not described herein in more detail.

Arrow 6 in Figure 1 denotes a feedback coupling. Thus, if the measuring arrangement detects that one or more of the properties of pipe 2 are not acceptable the process is controlled accordingly. The measuring arrangement 3 may also give a command to scrap certain parts of the pipe if the properties of the pipe are not acceptable.

Figure 2 shows an example of pipe 2. Pipe 2 is a multi-layer composite pipe which comprises an inner layer 2a, a barrier layer 2b and an outer layer 2c. There is adhesive material 7 between the inner layer 2a and the barrier layer 2b and between the barrier layer 2b and the outer layer 2c such that the layers 2a - 2c are very well adhered together.

The inner layer 2a may be for example of cross-linked polyolefin, such as cross-linked polyethylene PEX. The barrier layer 2b may be for example made of aluminium. The barrier layer 2b may be made for example from another metal. The outer layer 2c may be for example of polyolefin, such as polyethylene PE.

The diameter of the pipe 2 is typically in the range from 2 to 2000 mm. The wall thicknesses vary accordingly. Typically the amount of the adhesive material 7 is kept as low as possible. If the outer diameter of the pipe is 17 mm, the thickness of the inner layer 2a and the thickness of the outer layer 2c are typically close to 1 mm. The barrier layer 2b of aluminium is about 0,3 mm. The thickness of the adhesive material is about from 50 to 100 micrometers.

The inner layer 2a and the outer layer 2c can be, for example, made of polyolefins like polypropylene PP, polybutylene-1 PB, polyethylene PE or polyethylene of raised temperature resistance PE-RT. Also fluoro plastics may be used. If the barrier layer 2b is made of metal it can constitute a welded foil or it can be sputtered or applied by other techniques. It is also possible to make the barrier layer 2b of ethylene/vinyl alcohol E/VAL or some other barrier plastic.

The adhesive material 7 is modified such that its density differs from the densities of the materials of the inner layer 2a, barrier layer 2 b and outer layer 2c. The difference is in a certain range such that the areas where there is adhesive material 7 in pipe 2 can be seen very clearly with x-ray imaging. The adhesive material thus shows where the outer layer 2c ends and the barrier layer 2b begins and where the inner layer 2a ends and where the barrier layer 2b begins. Further, the distance between the adhesive materials 7 between the outer layer 2c and the barrier layer 2b and the inner layer 2a and the barrier layer 2b shows the thickness of the barrier layer 2b. Thus, the thicknesses of the inner layer 2a, the barrier layer 2b and the outer layer 2c can be measured very accurately with x-ray imaging. Further, with x-ray imaging it can be detected whether the adhesive material is distributed evenly such that there are no gaps or holes between the layers the adhesive material is supposed to adhere together.

The measuring arrangement may have an automatic detection for detecting whether the adhesive material 7 is distributed evenly and its amount is adequate. The measuring arrangement 3 may have a display which shows and alarms if the amount of the adhesive material 7 is not acceptable.

Typically the inner layer 2a and the outer layer 2c are made of polyethylene, the density of which is from 925 to 960 kg/m³. Normally the adhesive material is made of a resin based on polyethylene PE with a density range from 910 to 940 kg/m³. Such difference in density is not high enough for available measuring systems. The difference between the densities would preferably be greater than 10 %. The density of the adhesive material 7 can be modified by using heavy fillers like barium sulfate BaSO₄. Barium sulfate BaSO₄ is a rather neutral mineral.

The adhesive material 7 may, for example, comprise functionalised linear low density polyethylene LLDPE and suitable content of barium sulfate BaSO₄. Instead of barium sulfate other fillers may be used such as calcium carbonate CaCO₃.

In one example, the amount of the barium sulfate BaSO₄ is 30 %. In such a case the density of the adhesive material 7 is about 2000 kg/m³. The density of the aluminium in the barrier layer 2b is about 2700 kg/m³. However, trials have surprisingly shown that the attenuation of x-rays was even higher in the adhesive material 7 than in the aluminium. The areas where there is adhesive material 7 in pipe 2 can be seen very clearly with x-ray imaging. The x-ray image shows very clearly the inner layer 2a, the barrier layer 2b and the outer layer 2c.

If the barrier layer 2b is, for example, made of an aluminium foil, its thickness is accurately known beforehand such that it need not be measured during the manufacturing process. In such a case the distance between the outer surface of the adhesive material 7 on the barrier layer 2b and the inner surface of the adhesive material inside the barrier layer 2b can be measured. Because the thickness of the barrier layer 2b is known, the thickness of the adhesive material can be determined by subtracting the known value of the barrier layer from the measured total value. If the pipe has only two layers, it can be detected whether the adhesive material is distributed evenly. In a case described above the density of the adhesive material 7 can be the same as the density of the barrier layer 2b.

The density of the adhesive material 7 is typically higher than the densities of the plastic inner layer 2a and the outer layer 2c and lower than the density of the barrier layer 2b. It is also possible to make the density of the adhesive material 7 higher than the density of the barrier layer 2b.

For a man skilled in the art it is obvious that in the course of technical progress, the basic idea of the invention can be carried out in numerous ways. Thus, the invention and its embodiments are not limited by the previous examples but they may vary within the scope of the appended claims.

The difference in densities can be achieved by modifying the adhesive material 7 as described above. Alternatively, the plastic layers of the pipe can be modified by mixing different fillers to the plastic that forms the layers. In both cases the result is that the adhesive material and the outer layers become visible in x-ray.

The physical property that makes a difference between the adhesive material and the layers of the pipe can also be another physical property than density. The important thing is that because of the difference in that physical property, the attenuation of the radiation is different in the adhesive material and in at least one layer of the pipe.

## Claims

1. Method of manufacturing a pipe, the method comprising
making a pipe having at least two layers (2a, 2b, 2c),
attaching the layers (2a, 2b, 2c) with adhesive material (7) and
measuring the properties of the pipe (2), **characterized in that**
the layers (2a, 2b, 2c) and the adhesive material (7) are formed such that at least one physical property of the adhesive material (7) differs from the physical property of at least one layer (2a, 2b, 2c) of the pipe and that the thickness of the layer (2a, 2b, 2c) is measured online with x-ray imaging based on the difference between the physical property of the layer (2a, 2b, 2c) of the pipe and the physical property of the adhesive material (7).

2. The method of claim 1, **characterized in that**
the unity of the adhesive material (7) is measured with x-ray imaging.

3. The method of claim 1 or 2, **characterized in that**
the pipe comprises a barrier layer (2b), the thickness of which is known, that a total thickness of the adhesive material (7) and the barrier layer (2b) is measured and that the amount of the adhesive material (7) is determined by subtracting the thickness of the barrier layer (2b) from the measured total thickness.

4. The method of claim 1 or 2, **characterized in that**
the at least one physical property of the adhesive material (7) differs from the physical property of all the layers (2a, 2b, 2c) such that the thickness of the adhesive material (7) and whether the adhesive material (7) is distributed evenly, is determined from an x-ray image.

5. The method of any of the preceding claims, **characterized in that**
said at least one physical property is density.

6. The method of claim 5, **characterized in that**
the pipe comprises at least two plastic layers (2a, 2c) and a barrier layer (2b) between them and that
the density of the adhesive material (7) is higher than the densities of the plastic layers (2a, 2c) of the pipe.

7. The method of any one of the preceding claims, **characterized in that**
said difference is at least 10 %.

8. The method of any one of the preceding claims, **characterized in that**
the adhesive material (7) comprises barium sulfate (BaSO₄) as a filler.

9. A pipe comprising at least two layers (2a, 2b, 2c) and adhesive material (7) between the layers (2a, 2b, 2c), **characterized in that**
the adhesive material (7) and the layers (2a, 2b, 2c) are such that at least one physical property of the adhesive material (7) between the layers (2a, 2b, 2c) differs from the physical property of the material in at least one layer (2a, 2b, 2c) such that the thickness of the layer (2a, 2b, 2c) can be detected with x-ray imaging.

10. The pipe of claim 9, **characterized in that**
said at least one physical property is density.

11. The pipe of claim 10, **characterized in that**
the density of the adhesive material (7) is higher than the densities of the material in at least one layer (2a, 2b, 2c) of the pipe.

12. The pipe of any one of the claims 9 to 11, **characterized in that**
the difference between the physical property of the adhesive material (7) and the physical properties of the material in the layers (2a, 2b, 2c) is at least 10 %.

13. The pipe of any one of the claims 9 to 12, **characterized in that**
the adhesive material (7) contains barium sulfate (BaSO₄) as a filler.

14. The pipe of any one of the claims 9 to 13, **characterized in that**
the pipe (2) comprises an inner layer (2a) of plastic, a barrier layer (2b) of aluminium and an outer layer (2c) of plastic.

## Amended claims

### Amended claims in accordance with Rule 86(2) EPC.

**1.** Method of manufacturing a pipe, the method comprising
making a pipe having at least two layers (2a, 2b, 2c),
attaching the layers (2a, 2b, 2c) with adhesive material (7) and
measuring the properties of the pipe (2), **characterized in that**
the layers (2a, 2b, 2c) and the adhesive material (7) are formed such that at least one physical property of the adhesive material (7) differs from the physical property of at least one layer (2a, 2b, 2c) of the pipe and that the thickness of the layer (2a, 2b, 2c) is measured online with x-ray imaging based on the difference between the physical property of the layer (2a, 2b, 2c) of the pipe and the physical property of the adhesive material (7).

**2.** The method of claim 1, **characterized in that**
the unity of the adhesive material (7) is measured with x-ray imaging.

**3.** The method of claim 1 or 2, **characterized in that**
the pipe comprises a barrier layer (2b), the thickness of which is known, that a total thickness of the adhesive material (7) and the barrier layer (2b) is measured and that the amount of the adhesive material (7) is determined by subtracting the thickness of the barrier layer (2b) from the measured total thickness.

**4.** The method of claim 1 or 2, **characterized in that**
the at least one physical property of the adhesive material (7) differs from the physical property of all the layers (2a, 2b, 2c) such that the thickness of the adhesive material (7) and whether the adhesive material (7) is distributed evenly, is determined from an x-ray image.

**5.** The method of any of the preceding claims, **characterized in that**
said at least one physical property is density.

**6.** The method of claim 5, **characterized in that**
the pipe comprises at least two plastic layers (2a, 2c) and a barrier layer (2b) between them and that
the density of the adhesive material (7) is higher than the densities of the plastic layers (2a, 2c) of the pipe.

**7.** The method of any one of the preceding claims, **characterized in that**
said difference is at least 10 %.

**8.** The method of any one of the preceding claims, **characterized in that**
the adhesive material (7) comprises barium sulfate (BaSO₄) as a filler.

**9.** A pipe comprising at least two layers (2a, 2b, 2c) and adhesive material (7) between the layers (2a, 2b, 2c), **characterized in that**
the adhesive material (7) and the layers (2a, 2b, 2c) are such that at least one physical property of the adhesive material (7) between the layers (2a, 2b, 2c) differs from the physical properties of the materials in all the layers (2a, 2b, 2c) such that the thickness of the layer (2a, 2b, 2c) can be detected with x-ray imaging.

**10.** The pipe of claim 9, **characterized in that**
said at least one physical property is density.

**11.** The pipe of claim 10, **characterized in that**
the density of the adhesive material (7) is higher than the densities of the material in at least one layer (2a, 2b, 2c) of the pipe.

**12.** The pipe of any one of the claims 9 to 11, **characterized in that**
the difference between the physical property of the adhesive material (7) and the physical properties of the material in the layers (2a, 2b, 2c) is at least 10 %.

**13.** The pipe of any one of the claims 9 to 12, **characterized in that**
the adhesive material (7) contains barium sulfate (BaSO₄) as a filler.

**14.** The pipe of any one of the claims 9 to 13, **characterized in that**
the pipe (2) comprises an inner layer (2a) of plastic, a barrier layer (2b) of aluminium and an outer layer (2c) of plastic.
